(19) Europäisches Patentamt
European Patent Office
Office européen des brevets

(11) Veröffentlichungsnummer : **0 376 883 B1**

(12) # EUROPÄISCHE PATENTSCHRIFT

(45) Veröffentlichungstag der Patentschrift : **07.04.93 Patentblatt 93/14**

(51) Int. Cl.$^5$ : **C07F 7/18,** B01J 20/28

(21) Anmeldenummer : **89810942.6**

(22) Anmeldetag : **12.12.89**

(54) **Enantiomere Silane, modifiziertes Trägermaterial und dessen Verwendung.**

(30) Priorität : **20.12.88 CH 4761/88**

(43) Veröffentlichungstag der Anmeldung : **04.07.90 Patentblatt 90/27**

(45) Bekanntmachung des Hinweises auf die Patenterteilung : **07.04.93 Patentblatt 93/14**

(84) Benannte Vertragsstaaten : **CH DE FR GB IT LI NL SE**

(56) Entgegenhaltungen :
**EP-A- 0 298 734**
**CHEMICAL ABSTRACTS Band 107, Nr. 23, 7. December 1987, Seite 289, Zusammenfassung Nr. 214302b, Coumbus, Ohio, US; K Iwaki et al.: "Optical resolution of enantiomeric amino acid derivatives on a naphthylethylurea multiple-bonded chiral stationary phase prepared via anactivated carbamate intermediate"; & J. Chromatography 1987, 404(1), 117-22**

(56) Entgegenhaltungen :
**CHEMICAL ABSTRACTS Band 106, Nr. 21, 25. May 1987, Seite 774, Zusammenfassung Nr. 176817t, Coumbus, Ohio, US; N.Oi et al.: "Enantiomer separation by HPLC with some urea derivatives of L-valine as novel chiral stationary phases" & J. Liq. Chromatography 1986, 9(2-3), 511-17**
**CHEMICAL ABSTRACTS Band 103, Nr. 17, 28. October 1985, Seite 6, Zusammenfassung Nr 141090m, Columbus, Ohio, US; W H Pirkle et al.: "Alpha-Arylalkylamine-derived chiral stationary phases. Evaluation of urea linkages"; & J. Chromatography 1985, 322(2), 295-307**

(73) Patentinhaber : **CIBA-GEIGY AG**
**Klybeckstrasse 141**
**CH-4002 Basel (CH)**

(72) Erfinder : **Lohmann, Dieter, Dr.**
**Mittelweg 56**
**CH-4142 Münchenstein (CH)**
Erfinder : **Däppen, Richard, Dr.**
**Neumattstrasse 31**
**CH-4142 Münchenstein (CH)**

EP 0 376 883 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Enantiomere aus isocyanat-funktionellen Organosilanen und chiralen Hydroxycarbonsäureamiden, ein mit diesen Enantiomeren modifiziertes Trägermaterial als stationäre Phase für chromatographische Trennverfahren, und die Verwendung des Trägermaterials zur chromatographischen Trennung insbesondere von chiralen Verbindungen.

Es ist bekannt, dass chirale Substanzen unterschiedliche Wirkungen auf Organismen ausüben. Die Bereitstellung chiraler Substanzen als Wirkstoffe bzw. als Zwischenprodukte zur Herstellung von chiralen Wirkstoffen hat eine hohe Bedeutung erlangt. Neben der stereospezifischen Synthese solcher Verbindungen werden besonders chromatographische Verfahren zur Trennung von Enantiomeren benutzt. Hauptsächlich werden hierbei stationäre Phasen verwendet, von denen eine Anzahl käuflich erhältlich ist. Bei solchen stationären Phasen kann es sich zum Beispiel um mit chiralen Substanzen modifizierte feste Trägermaterialien handeln. Ferner können auch natürliche und synthetische Polymere mit chiralen Strukturelementen verwendet werden. Als festes Trägermaterial kann beispielsweise Silikagel verwendet werden, dessen OH-Gruppen an der Oberfläche chemisch derivatisiert werden können. Ferner eignen sich auch feste Polymere mit funktionellen Gruppen, die derivatisiert werden können. Zur chiralen Differenzierung von Racematen können Trägermaterialien zum Beispiel mit chiralen Verbindungen derivatisiert werden (vgl. R. Däppen et al., Journal of Chromatography, 373, S. 1-20 (1986).

In der US-PS 4 104 296 sind Umsetzungsprodukte von (Aminoalkyl)-alkoxy-silanen mit achiralen Lactonen beschrieben, die z.B. als Haftvermittler in glasfaserverstärkten Kunststoffen verwendet werden können. J.F.W. Keana et al. erwähnen im J. Org. Chem., Vol. 51, S. 1641-1644 (1986) mit racemischem N-[3-(Triethoxysilyl)propyl]-10-trichlormethyl-10-hydroxyundecancarbonsäureamid modifiziertes Silikagel für Festphasensynthesen.

Y. Dobashi et al. beschreiben in Tetrahedron Letters 26, No. 35, S. 4217-4220 (1985) Tartramidgruppen enthaltende Festphasen für die chromatographische Trennung von Enantiomeren. In der EP-A-0 102 993 sind optisch aktive Isocyanate beschrieben, die mit amino-funktionellen Silikagelen zu chiral modifizierten festen Phasen für die chromatographische Trennung von Enantiomeren umgesetzt werden.

Ein Gegenstand der Erfindung sind Verbindungen der Formel I

$$(R^1O)_{3-a}Si(R^2)_a-R^3-NH-\overset{O}{\overset{\|}{C}}-O-R^5-\overset{O}{\overset{\|}{C}}-NH-R^4-Y \qquad (I),$$

worin

$R^1$ $C_1$-$C_4$-Alkyl, Phenyl oder Benzyl bedeutet,

$R^2$ für $C_1$-$C_4$-Alkyl, Phenyl oder Benzyl steht,

a 0, 1 oder 2 bedeutet,

$R^3$ lineares oder verzweigtes $C_1$-$C_{12}$-Alkylen darstellt, das unsubstituiert oder mit -OH substituiert ist, oder $R^3$ Phenylen darstellt,

$R^5$ der um die -CO-O-Gruppe verminderte zweiwertige Rest eines Lactons mit insgesamt 4 bis 7 Ringgliedern im Lactonning ist, das mindestens ein chirales C-Atom enthält und einer reinen enantiomeren Form oder zumindest überwiegend einer enantiomeren optisch aktiven Form entspricht,

$R^4$ für eine direkte Bindung,

$$C_1\text{-}C_4\text{-Alkyl-}CH\langle \quad \text{oder} \quad CF_3\text{-}CH\langle$$

steht, und

Y Phenyl, Naphthyl, Fluorenyl oder Anthryl bedeutet, die unsubstituiert oder mit $C_1$-$C_{12}$-Alkyl, $C_1$-$C_{12}$-Alkoxy, Halogen, -CN oder -$NO_2$ substituiert sind.

$R^1$ kann als Alkyl linear oder verzweigt und z.B. Methyl, Ethyl, n- und i-Propyl, n-, i- oder t-Butyl sein. Bevorzugt stellt $R^1$ Methyl oder Ethyl dar.

$R^2$ kann als Alkyl linear oder verzweigt und z.B. Methyl, Ethyl, n- und i-Propyl, n-, i- oder t-Butyl sein. Bevorzugt ist $R^2$ Methyl.

In Formel I steht a bevorzugt für 0 oder 1 und insbesondere für 0.

$R^3$ enthält als Alkylen bevorzugt 2 bis 6 C-Atome, besonders 3 oder 4 C-Atome, wobei das Alkylen unsubstituiert oder mit -OH substituiert ist. Beispiele für Alkylen sind Methylen, 1,1- oder 1,2-Ethylen, 1,1-, 1,2- oder 1,3-Propylen, 1,2-, 1,3- oder 1,4-Butylen, 2-Methyl-1,3-propylen, 1,2-, 1,3-, 1,4- oder 1,5-Pentylen, 1,2-, 1,3-, 1,4-, 1,5- oder 1,6-Hexylen, Heptylen, Octylen, Nonylen, Decylen, Undecylen oder Dodecylen.

$R^3$ stellt als Phenylen besonders 1,3- oder 1,4-Phenylen dar.

Besonders bevorzugt steht $R^3$ für $-(CH_2)_n-$, $-CH(CH_3)-$ oder $-CH_2-CH(CH_3)-CH_2-$, wobei n besonders die Zahlen 3 oder 4 bedeutet. Ganz besonders steht $R^3$ für 1,3-Propylen.

$R^4$ kann $C_1$-$C_4$-Alkylmethyliden bedeuten, worin das Alkyl z.B. Methyl, Ethyl, n- oder i-Propyl oder n-, i- oder t-Butyl sein kann. Besonders bevorzugt ist das Alkyl Methyl.
In einer bevorzugten Ausführungsform stellt $R^4$ Ethyliden, 1,1-Propyliden oder 1,1,1-Trifluorethyliden dar.

Y kann ein- oder mehrfach substituiert sein, bevorzugt 1- bis 3-, besonders 1- oder 2-fach. Alkyl und Alkoxy als Substituenten enthalten bevorzugt 1 bis 6, besonders 1 bis 4 C-Atome. Beispiele sind Methyl, Ethyl, n- und i-Propyl, n-, i- und t-Butyl und entsprechende Alkoxygruppen. Halogen bedeutet bevorzugt -F, -Cl und -Br. Bevorzugte Substituenten für Y sind $C_1$-$C_4$-Alkyl, $C_1$-$C_4$-Alkoxy, -F, -Cl, -Br, -CN und $-NO_2$.

Eine bevorzugte Ausführungsform ist dadurch gekennzeichnet, dass Y für Phenyl oder Naphthyl steht, das unsubstituiert oder mit $C_1$-$C_4$-Alkyl, $C_1$-$C_4$-Alkoxy, -F, -Cl, -Br, -CN oder $-NO_2$ substituiert ist.
Eine andere bevorzugte Ausführungsform besteht darin, dass $R^4$ eine direkte Bindung und Y 3,5-Dinitrophen-1-yl oder 3,5-Dicyanophen-1-yl sind.

Besonders bevorzugt sind Verbindungen der Formel I, worin $R^4$ Ethyliden ist und Y für unsubstituiertes oder substituiertes Naphthyl steht. Insbesondere bevorzugt sind Verbindungen der Formel I, worin $-R^4$-Y für die (R)- oder (S)-Form von

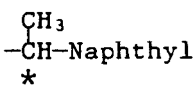

steht.

Bei $R^5$ als zweiwertigem Rest eines Lactons enthält das Lacton bevorzugt 4 bis 6, besonders 4 oder 5 Ringglieder. Es kann je nach Ringgrösse 1 bis 6, bevorzugt 1 bis 4 und besonders 1 oder 2 chirale C-Atome enthalten. Bevorzugt befindet sich ein chirales C-Atom im Rest $R^5$ in α-oder β-Stellung zur -O-Gruppe. Ueberwiegend enantiomere optisch aktive Form bedeutet z.B. mindestens 90 %, bevorzugt mindestens 95 % einer optisch aktiven enantiomeren Form. Besonders bevorzugt ist die reine enantiomere Form.
Bei den Lactonen, von denen sich der zweiwertige Rest $R^5$ ableitet, kann es sich z.B. um mindestens einfach substituierte Lactone von gesättigten $C_3$-$C_6$-Hydroxycarbonsäuren oder ethylenisch ungesättigten $C_4$-$C_6$-Hydroxycarbonsäuren; oder von Hydroxycarbonsäuren der Formel VII

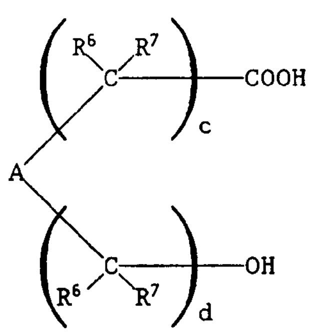

(VII)

handeln,
worin c und d je für 0 oder 1 stehen und eines von c oder d 1 ist, $R^6$ und $R^7$ H, $C_1$-$C_6$-Alkyl, $-CF_3$, oder gegebenenfalls substituiertes Phenyl oder Naphthyl bedeuten, und A einen mono- oder polycyclischen, gesättigten oder ethylenisch ungesättigten cycloaliphatischen oder heterocycloaliphatischen Rest mit 4 bis 18, besonders 5 bis 12 C-Atomen mit vorzugsweise O, S oder N als Heteroatomen bedeutet; oder A für in 1,2-Stellung gebundenes $C_6$-$C_{16}$-Arylen oder $C_5$-$C_{16}$-Heteroarylen mit vorzugsweise O, S oder N als Heteroatom steht, wobei mindestens eines von c oder d 1 bedeuten und $R^6$ und $R^7$ voneinander verschieden sind.

Der Rest A in Formel VII, von denen sich $R^5$ ableitet, kann unsubstituiert oder mit $C_1$-$C_6$-Alkyl, $C_1$-$C_6$-Alkoxy, $C_1$-$C_6$-Alkylthio, $C_1$-$C_{12}$-Alkylamino, $C_5$- oder $C_6$-Cycloalkyl, $C_5$- oder $C_6$-Cycloalkoxy, $C_6$-$C_{10}$-Aryl, $C_6$-$C_{10}$-Aryloxy, $C_7$-$C_{11}$-Aralkyl, $C_7$-$C_{12}$-Aralkyloxy, $C_1$-$C_6$-Halogenalkyl, $C_1$-$C_6$-Hydroxyalkyl, $C_1$-$C_6$-Alkoxymethyl, ($C_6$-$C_{12}$-Aryloxy)-methyl, ($C_6$-$C_{18}$-Aryl)methyloxymethyl, $C_1$-$C_{12}$-Acyloxy, $-CO-OR^8$, -F, -Cl, -Br, -OH oder -CN substituiert sein, wobei $R^8$ $C_1$-$C_6$-Alkyl, Cyclohexyl, Phenyl oder Benzyl bedeutet. Beispiele für Substituenten

sind Methyl, Ethyl, n- und i-Propyl, n-, i- und t-Butyl, Pentyl, Hexyl und entsprechende Oxy- und Thioreste; Cyclopentyl, Cyclohexyl und entsprechende Oxy- und Thioreste; Phenyl, Phenyloxy, Benzyl, Triphenylmethyloxy, Benzyloxy, Fluormethyl, Trifluormethyl, Chlormethyl, Trichlormethyl, β-Chlorethyl; Hydroxymethyl, β-Hydroxyethyl; Methoxymethyl, Ethoxymethyl, β-Methoxyethyl; Phenoxymethyl, Naphthyloxymethyl; Benzyloxymethyl, (Diphenylmethyloxy)methyl, (Triphenylmethyloxy)methyl; Formyloxy, Acetyloxy, n- und i-Propionyloxy, n-, i- und t-Butyroyloxy; Methoxycarbonyl, Ethoxycarbonyl; -F, -Cl, -Br, -OH und -CN.

Beispiele für zweiwertige Reste von Hydroxycarbonsäuren sind 1,2-Propylen, 3-Chlor-1,2-propylen, 3,3-Dichlor-1,2-propylen, 3,3,3-Trichlor-1,2-propylen, 3,3,3-Trichlor-2-methyl-1,2-propylen, 4,4,4-Trichlor-1,3-butylen, But-1-enyl-1,3-en, 2-Methyl-but-1-enyl-1,4-en, 1,2,3,4-Tetrahydroxybutyl-1,4-en, 1,2,3,4,5-Pentahydroxypentyl-1,5-en, 2-Methyl-1,3-propylen, 2,2-Dimethyl-3-hydroxy-1,3-propylen, 1-Hydroxy-1,3-propylen, 1-(Ethoxycarbonyl)-1,3-propylen, 1-(Triphenylmethyloxy)-1,3-propan, 3-(α,β-Dihydroxyethyl)-1,2-dyhydroxy-1,3-propylen.

Die cyclischen nichtaromatischen Reste A in Formel VII können in 1,2-, 1,3- oder 1,4-Stellung gebunden sein.

Beispiele für A sind 1,2-Cyclobutylen, 1,2-Cyclopentylen, 1,2-Cyclohexylen, 2,3-Tetrahydrofuranylen, Cyclohex-4-enyl-1,2-en, 1,2-Phenylen, 4-Nitro-1,2-phenylen, 3,5-Dinitro-1,2-phenylen, 2,3-Naphthylen, 7-Nitro-2,3-naphthylen, 2,3-Pyridinylen, 2,3-Furanylen, 2,3-Pyrrolyden.

$R^6$ steht bevorzugt für H. $R^6$ und $R^7$ als Alkyl können z.B. Methyl, Ethyl, n- oder i-Propyl, n-, i- oder t-Butyl, Pentyl oder Hexyl, vorzugsweise Methyl oder Ethyl sein.

Bevorzugt sind Verbindungen der Formel I, worin $R^5$ lineares $C_2$-$C_5$-Alkylen oder $C_3$-$C_5$-Alkenylen darstellt, das mit $C_1$-$C_6$-Alkyl, $C_1$-$C_6$-Alkoxy, $C_1$-$C_6$-Alkylthio, $C_1$-$C_{12}$-Alkylamino, $C_5$- oder $C_6$-Cycloalkyl, $C_5$- oder $C_6$-Cycloalkoxy, $C_6$-$C_{10}$-Aryl, $C_6$-$C_{10}$-Aryloxy, $C_7$-$C_{11}$-Aralkyl, $C_7$-$C_{12}$-Aralkyloxy, $C_1$-$C_6$-Halogenalkyl, $C_1$-$C_6$-Hydroxyalkyl, $C_1$-$C_6$-Alkoxymethyl, ($C_6$-$C_{12}$-Aryloxy)-methyl, ($C_6$-$C_{18}$-Aryl)methyloxymethyl, $C_1$-$C_{12}$-Acyloxy, -CO-$OR^8$, -F, -Cl, -Br, -OH oder -CN substituiert ist, wobei $R^8$ $C_1$-$C_6$-Alkyl, Cyclohexyl, Phenyl oder Benzyl bedeutet.

Bevorzugte Substituenten sind $C_1$-$C_4$-Alkyl, $C_1$-$C_4$-Alkoxy, $C_1$-$C_6$-Alkylamino, $C_5$- oder $C_6$-Cycloalkyl, $C_5$- oder $C_6$-Cycloalkoxy, Phenyl, Naphthyl, Phenyloxy, Benzyl, Benzyloxy, Diphenylmethyloxy, Trityloxy, $C_1$-$C_4$-Halogenalkyl, besonders Trichlormethyl, $C_1$-$C_4$-Hydroxyalkyl, $C_1$-$C_4$-Alkoxymethyl, Phenoxymethyl, Benzyloxymethyl, $C_2$-$C_8$-Acyloxy, -CO-$OR^8$, -F, -Cl, -Br, -OH und -CN, wobei $R^8$ $C_1$-$C_4$-Alkyl, Cyclohexyl, Phenyl oder Benzyl ist.

Eine andere bevorzugte Ausführungsform sind Verbindungen der Formel I, worin $R^5$ einem Rest der Formel II entspricht,

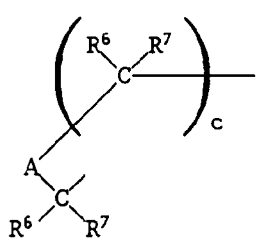 (II),

worin

A 1,2-Phenylen oder 2,3-Naphthylen bedeutet, das unsubstituiert oder mit -F, -Cl, -Br, -OH, -CN, $-NO_2$, $C_1$-$C_6$-Alkyl oder $C_1$-$C_6$-Alkoxy substituiert ist,

c für 0 oder 1 steht, und

$R^6$ und $R^7$ voneinander verschieden sind und H, $C_1$-$C_6$-Alkyl, $-CF_3$, Phenyl oder Naphthyl bedeuten, wobei das Phenyl oder Naphthyl unsubstituiert oder mit -F, -Cl, -Br, -OH, -CN, $-NO_2$, $-CF_3$, $C_1$-$C_6$-Alkyl oder $C_1$-$C_6$-Alkoxy substituiert ist. Bevorzugte Substituenten für A sind -F, -Cl, -Br, -CN, $-NO_2$, $C_1$-$C_4$-Alkyl und $C_1$-$C_4$-Alkoxy.

$R^6$ und $R^7$ sind bevorzugt H, $C_1$-$C_4$-Alkyl, $-CF_3$, Phenyl oder Naphthyl. Bevorzugte Substituenten für Phenyl oder Naphthyl sind -F, -Cl, -Br, -CN, $-NO_2$, $-CF_3$, $C_1$-$C_4$-Alkyl oder $C_1$-$C_4$-Alkoxy.

In einer bevorzugten Ausführungsform steht $R^5$ für den um die COO-Gruppe verminderten zweiwertigen Rest eines β-Lactons, der bevorzugt 1 chirales C-Atom enthält.

In einer besonders bevorzugten Ausführungsform steht $R^5$ für die R- oder S-Form von

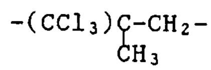

oder $-(CCl_3)CH-CH_2-$.

Ganz besonders bevorzugt handelt es sich bei den Verbindungen der Formel I um die Stereoisomeren der Formel

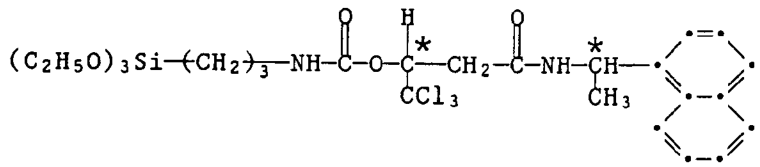

oder

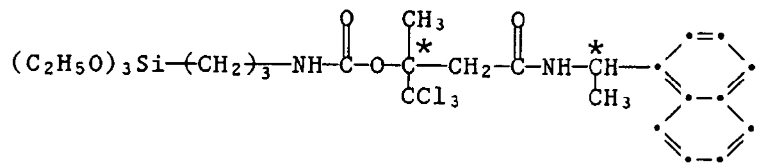

wobei * das chirale C-Atom in R- oder S-Form kennzeichnet. In den Formeln entspricht das linke C* bevorzugt der R- und das rechte C* bevorzugt der S-Form.

Ein weiterer Gegenstand der Erfindung ist ein Verfahren zur Herstellung von Verbindungen der Formel I, das dadurch gekennzeichnet ist, dass man eine Verbindung der Formel III

$$(R^1O)_{3-a}Si(R^2)—R^3\text{-NCO} \qquad \text{(III)}$$

mit einer Verbindung der Formel IV

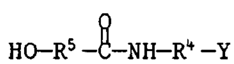 (IV)

umsetzt, wobei $R^1$, $R^2$, $R^3$, $R^4$, $R^5$, Y und a die zuvor angegebenen Bedeutungen haben.

Die Methode ist an sich bekannt. Im allgemeinen verwendet man äquimolare Mengen der Verbindungen der Formeln III und IV. Die Umsetzung kann z.B. dergestalt erfolgen, dass man eine Lösung der Verbindungen der Formel III vorzugsweise bei Raumtemperatur zu einer Lösung der Verbindung der Formel IV zugibt und reagieren lässt. Die Aufarbeitung kann nach üblichen Methoden erfolgen, z.B. indem man das Lösungsmittel verdampft und den Destillationsrückstand z.B. durch Destillation, Umkristallistion oder chromatographische Methoden, reinigt. Es ist zweckmässig die Reaktion mit Aminen, Diazaverbindungen oder zinnorganischen Verbindungen, z.B. Diazabicyclooctan, Pyridin oder Dibutylzinndilaurat, katalytisch zu beschleunigen.

Geeignete Lösungsmittel sind beispielsweise aprotische Lösungsmittel wie z.B. Ether (Diethylether, Tetrahydrofuran, Dioxan), halogenierte aliphatische Kohlenwasserstoffe (Methylenchlorid, Chloroform) und Kohlenwasserstoffe (Hexan, Cyclohexan, Toluol).

Die Verbindungen der Formel IV können in einfacher Weise durch die Umsetzung eines Lactons der Formel VII

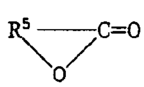 (VII)

mit einem Amin der Formel $Y\text{-}R^4\text{-}NH_2$ (VIII) erhalten werden.

Die Verbindungen der Formeln III und VIII sind bekannt, nach bekannten Verfahren herstellbar oder kommerziell erhältlich. Optisch aktive Lactone der Formel VII sind in grosser Anzahl bekannt oder können nach bekannten Verfahren hergestellt werden [vgl. z.B. J. Chem. Soc., Vol. 104, S. 166-168 (1982), J. Org. Chem., 52, S. 3011-3017 (1987), J. of Chromat., 387, S. 313-323 (1987), Houben-Weyl 6/2, S. 515-527 (1963), Houben-Weyl 6/2, S. 571 ff (1963), Houben-Weyl E 5/1, S. 715-773 (1985) Georg Thieme Verlag, Stuttgart/New York]. Racemate können nach bekannten Verfahren getrennt werden.

Die Verbindungen der Formel I eignen sich z.B. zur Herstellung von Materialien für chromatographische

Trennverfahren.

Ein weiterer Gegenstand der Erfindung ist ein Material, das dadurch gekennzeichnet ist, dass an eine Brückengruppe eines festen Trägermaterials Reste der Formel Va, Vb und/oder Vc

$$-Si(OR^1)_{2-x}(R^2)_x\!\!-\!R^3-NH-\overset{O}{\overset{\|}{C}}-O-R^5-\overset{O}{\overset{\|}{C}}-NH-R^4-Y \qquad (Va),$$

$$>Si(OR^1)_{1-y}(R^2)_y\!\!-\!R^3-NH-\overset{O}{\overset{\|}{C}}-O-R^5-\overset{O}{\overset{\|}{C}}-NH-R^4-Y \qquad (Vb),$$

$$\geq Si-R^3-NH-\overset{O}{\overset{\|}{C}}-O-R^5-\overset{O}{\overset{\|}{C}}-NH-R^4-Y \qquad (Vc),$$

gebunden sind, worin x für 0, 1 oder 2 und y für 0 oder 1 stehen und $R^1$, $R^2$, $R^3$, $R^4$, $R^5$ und Y die zuvor angegebenen Bedeutungen haben. Für $R^1$, $R^2$, $R^3$, $R^4$, $R^5$ und Y gelten auch die zuvor angegebenen Bevorzugungen. Bei der Brückengruppe handelt es sich besonders um -O-.

Ein weiterer Gegenstand der Erfindung ist ein Verfahren zur Herstellung eines Materials, das dadurch gekennzeichnet ist, dass man

a) ein festes Trägermaterial mit über Brückengruppen gebundenen Resten der Formeln VIa, VIb und/oder VIc

$$-Si(OR^1)_{2-x}(R^2)_x\!\!-\!R^3-NCO \qquad (VIa),$$

$$>Si(OR^1)_{1-y}(R^2)_y\!\!-\!R^3-NCO \qquad (VIb),$$

$$\geq Si-R^3-NCO \qquad (VIc),$$

mit einer Verbindung der Formel IV

$$HO-R^5-\overset{O}{\overset{\|}{C}}-NH-R^4-Y \qquad (IV)$$

umsetzt, oder

b) ein festes Trägermaterial, das gegenüber der Silangruppe $(R^1O)_{3-a}Si(R^2)_a\!-$ reaktive Gruppen enthält, mit einer Verbindung der Formel I umsetzt,

wobei x für 0, 1 oder 2 und y 0 oder 1 bedeuten und $R^1$, $R^2$, $R^3$, $R^4$, $R^5$ und Y die zuvor angegebenen Bedeutungen haben.

Für $R^1$, $R^2$, $R^3$, $R^4$, $R^5$ und Y gelten auch die zuvor angegebenen Bevorzugungen. Bei den reaktiven Gruppen handelt es sich bevorzugt um OH-Gruppen.

Bei den festen Trägermaterialien kann es sich z.B. um Glas, Silikate, Silikagel, $Al_2O_3$ oder $TiO_2$ handeln. Das Trägermaterial liegt bevorzugt in Form feiner Teilchen vor. Solche Trägermaterialien sind vielfach in der Literatur beschrieben [siehe z.B. M. Verzele et al., Preparative High Performance Liquid Chromatography, Drukkerig De Muyter, Belgien, S. 77-89 (1986); R.W. Souter, Chromatographic Separations of Stereoisomers, CRC Press, S. 117-195 (1985); W. Noll, Chemie und Technologie der Silicone, Verlag Chemie, Weinheim (1968), Laborbücher Chemie, Praxis der Hochleistungs-Flüssigchromatographie, Verlag Moritz Diesterweg, S.

76-78 (1986)]. Ein besonders bevorzugtes Trägermaterial ist Silikagel.

Das Trägermaterial in der Verfahrensvariante a) ist teilweise kommerziell erhältlich oder nach bekannten Verfahren herstellbar. Bevorzugt ist die Verfahrensvariante b).

Das Verfahren kann so durchgeführt werden, dass man die Reaktion in einem separaten Reaktionsgefäss durchführt und dann das Reaktionsprodukt in eine Chromatograhiesäule füllt. Man kann das Verfahren aber auch so durchführen, dass man die Reaktion z.B. in einer Chromatographiesäule oder mit beschichteten Dünnschichtplatten durchführt, die mit einem Trägermaterial gemäss Verfahrensvariante a) oder b) gefüllt bzw. beschichtet sind. Diese Verfahren sind an sich bekannt. Die erfindungsgemässe Verfahrensvariante b) ist besonders bevorzugt.

Die Reaktion kann z.B. so durchgeführt werden, dass man das Trägermaterial in einem inerten Lösungsmittel suspendiert, z.B. in Kohlenwasserstoffen wie Hexan, Benzol, Toluol oder Xylol. Zu der Suspension kann dann eine Lösung einer enantiomeren Verbindung der Formel IV bzw. eine Verbindung der Formel I, vorteilhaft im Ueberschuss, zugegeben werden. Als Lösungsmittel wird zweckmässig das in der Suspension verwendete Lösungsmittel verwendet. Die Temperatur bei der Zugabe wird vorteilhaft bei Raumtemperatur gehalten. Das Reaktionsgemisch wird darauf noch weiter gerührt, bevorzugt bei erhöhter Temperatur, z.B. 50 bis 150°C. Vorteilhaft wird der entstehende Alkohol azeotrop entfernt. Das Umsetzungsprodukt kann entweder direkt für chromatographische Zwecke in Säulen gefüllt werden oder das Material abfiltriert, gewaschen, getrocknet und bis zur Verwendung gelagert werden. Man kann aber auch das Lösungsmittel vor dem Weiterrühren entfernen, z.B. durch Destillation gegebenenfalls im Vakuum, den trockenen Rückstand einige Zeit gegebenenfalls im Vakuum auf z.B. 50 bis 150°C erwärmen, und danach waschen und trocknen.

Das erfindungsgemässe Material eignet sich hervorragend als stationäre Phase in chromatographischen Trennverfahren von chiralen Verbindungen, besonders in flüssigchromatographischen Verfahren. Eine solche Verwendung ist ein weiterer Gegenstand der Erfindung.

Das erfindungsgemässe chromatographische Material bietet verschiedene Vorteile:

Die Elutionsreihenfolge kann durch die absolute Konfiguration der Lactone beeinflusst werden.

Es eignet sich für die Trennung von sonst schwierig oder nur nach vorheriger Derivatisierung trennbaren Racematen, wie z.B. racemischen Diolen, Diaminen und Rotationsisomeren. Neben Enantiomeren können auch Diastereomere und andere Stereoisomere getrennt werden;

Das Material zeigt eine hohe chemische Stabilität, wodurch eine lange Verwendbarkeit gewährleistet wird.

Die präparative Kapazität ist hoch.

Ueblicherweise werden Hexan, niedere Alkohole oder Ether oder Gemische davon als Lösungsmittel verwendet. Das erfindungsgemässe Material ermöglicht die Verwendung technischer Lösungsmittel und stark polarer Lösungsmittel, z.B. $CH_2Cl_2$, $CHCl_3$, Aceton, Essigsäureethylester, Tetrahydrofuran, Dioxan oder Acetonitril. Mit der Verwendung von polaren Lösungsmitteln kann eine erhebliche Verkürzung der Elutionszeiten erzielt werden, was besonders für die präparative Chromatographie von Bedeutung ist. Es können auch superkritische Lösungsmittel verwendet werden, z.B. Kohlendioxid.

Die hohen Enantioselektivitäten sind besonders überraschend, wenn in der Gruppe
-O-$R^5$- der chirale Selektor

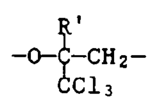

gebunden ist, wobei R′ H oder $C_1$-$C_6$-Alkyl, z.B. Methyl, Ethyl, Propyl oder Butyl, bedeuten.

Die nachfolgenden Beispiele erläutern die Erfindung näher.

Die theoretische Bodenzahl der Säulen, als Mass für die Qualität der Packung wird in der üblichen Weise mit Toluol als Referenzsubstanz bestimmt, wie es z.B. von V. Meyer, "Praxis der Hochleistungsflüssigchromatographie", 4. Auflage, Diesterweg/Salle/Sauerländer 1986, S. 20, Frankfurt beschrieben ist.

Die Charakterisierung der Säulen erfolgt in üblicher Weise, wie z.B. in V. Meyer, "Praxis der Hochleistungsflüssigchromatographie", Diesterweg/Salle/ Sauerländer, 4. Auflage, Frankfurt 1986, S. 18 ff. beschrieben mit den Kapazitätsfaktoren $k_1$ und $k_2$, sowie dem Trennfaktor $\alpha$ und dem Auflösungsfaktor $R_s$.

A) Herstellung von Ausgangsprodukten

Beispiel 1:

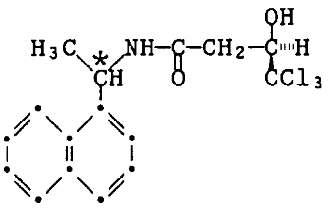

In einem 25 ml Rundkolben wird in einer Atmosphäre von trockenem Stickstoff eine Lösung von 0,96 ml (5,277 mMol) (±)1-(1-Naphthyl)-ethylamin in 5 ml trockenem Toluol zu einer Lösung von 1 g (5,277 mMol) R(-)4-Trichlormethyl-2-oxetanon zugetropft. Nach Abklingen der leicht exothermen Reaktion wird während 12 Stunden bei Raumtemperatur gerührt. Die entstandene klare Lösung wird eingedampft und der Rückstand über Kieselgel mit Toluol/Essigester (9:1) als Eluent chromatographiert. Dabei werden die beiden Diastereomeren getrennt und als weisse kristalline Substanzen isoliert.

Diastereomer A: $[\alpha]_D^{20}$ = -18,9 ± 1° (1,0 %, $CHCl_3$)
Fp 149°C
Ausbeute: 0,7 g (73,7 % der Theorie).

Diastereomer B: $[\alpha]_D^{20}$ = -52,4 ± 1° (1,0 %, $CHCl_3$)
Fp 54°C
Ausbeute: 0,75 g (78,9 % der Theorie).

Beispiel 2:

Wie in Beispiel 1 beschrieben wird
a) enantiomeres S(-)-1(1-Naphthyl)-ethylamin und
b) enantiomeres R(+)-1(1-Naphthyl)-ethylamin mit R(-)-4-Trichlormethyl-2-oxetanon umgesetzt. Der Vergleich der Eigenschaften der so erhaltenen Produkte mit denjenigen der Diastereomeren aus Beispiel 1 zeigt, dass Diastereomer A die absolute Konfiguration S,R und Diastereomer B die absolute Konfiguration R,R besitzt.

Beispiel 3:

Wie in Beispiel 1 beschrieben, werden 2,5 g (0,01497 Mol) racemisches 1-(1-Naphthyl)-ethylamin in 30 ml Toluol mit 2,84 g (0,01497 Mol) racemischem 4-Trichlormethyl-2-oxetanon umgesetzt. Die chromatographische Trennung der Isomeren des so erhaltenen Produktes an Kieselgel mit Toluol/Essigester (9:1) als Eluent liefert ein zuerst eluiertes, kristallines

Enantiomerenpaar A: 2,5 g = 93,6 % der Theorie
Fp 171-174°C,

und ein später eluiertes kristallines

Enantiomerenpaar B: 1,94 g = 72,6 % der Theorie
Fp 152-154°C.

Beispiel 4:

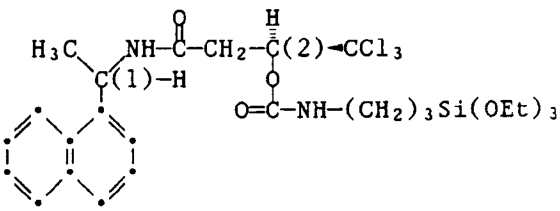

In einem 100 ml Dreihalskolben mit Rührer, Innenthermometer und Gaseinleitungsrohr wird unter trockener $N_2$-Atmosphäre das gemäss Beispiel 1 hergestellte Diastereomer A (4,5 g = 0,01247 Mol) mit 3-Isocyanatopropyl-triethoxysilan (3,1 g = 0,125 Mol) in Toluol (100 ml) unter Zusatz von Diaza-bicyclooctan (20 mg) als Katalysator umgesetzt. Zur vollständigen Umsetzung wird das Reaktionsgemisch 36 h auf 50-60°C erwärmt, anschliessend eingedampft und im Hochvakuum von Lösungsmittel befreit. Das so erhaltene Rohprodukt wird durch Säulenchromatographie an Kieselgel mit n-Hexan/Diethylether (6:4) als Eluent gereinigt. Die Reinheit und die Zusammensetzung des viskosen farblosen Produktes werden durch Dünnschichtchromatographie und Elementaranalyse bestimmt.

Elementaranalyse:

ber. %: C 51,36, H 6,13, N 4,60, Cl 17,49, Si 4,62.
gef. %: C 51,51, H 6,37, N 4,82, Cl 17,06, Si 4,87.

Beispiel 5:

4 g Kieselgel (Matrex Silica 5 µm 100 Å; Amicon Corp. Lausanne) werden bei 0,1 Pascal und 150°C während 16 h getrocknet. Dazu gibt man eine Lösung von 1,5 g (2,6 mMol) Silan, hergestellt nach Beispiel 4, in 10 ml trockenem Toluol. Die Komponenten werden in einem 50 ml Kugelrohrstück gut vermischt. Bei 70°C/0,1 Pascal wird das Toluol entfernt. Das trockene Pulver wird 16 h bei 110°C und 0,1 Pascal gehalten. Nach dem Abkühlen wird das Pulver auf einer G4-Nutsche mit je 10 ml Toluol, Aceton und Methanol gewaschen und über Nacht bei 90°C/0,1 Pascal getrocknet.
Man erhält 4,55 g hellbeiges Pulver mit 8,38 % C, 1,48 % H und 0,83 % N, was einem Gehalt von 0,29 mMol/g chiralem Silan (auf % C basierend) entspricht.

Beispiel 6:

0,81 g (2,2 mMol) enantiomerenreine Verbindung gemäss Beispiel 2a werden in 10 ml trockenem Toluol gelöst. Nach Zugabe von 0,49 g (0,20 mMol) 3-Isocyanatopropyltriethoxysilan (Petrarch Systems; Bristol PA) wird 16 h bei 90°C gerührt. Diese Mischung wird zu 4,0 g Kieselgel (Matrex Silica 5 µm, 100 Å, Amicon Corp. Lausanne) gegeben. Bei 70°C/0,1 Pascal wird das Toluol entfernt. Das trockene Pulver wird 16 h bei 110°C und 0,1 Pascal gehalten. Nach dem Abkühlen wird das Produkt auf einer G4-Fritte mit je 10 ml Toluol, Aceton und Methanol gewaschen und anschliessend über Nacht bei 90°C/0,1 Pascal getrocknet.
Man erhält 3,74 g hellbeiges Pulver mit 6,20 % C, 1,30 % H und 0,80 % N, was einem Gehalt von 0,22 mMol/g chiralem Silan (auf % C basierend) entspricht.

Beispiel 7:

3,0 g des Materials, gemäss Beispiel 5 wird als Dispersion in Isopropanol mit Methanol bei 600 bar mit 5 ml/min in eine analytische HPLC-Säule (d = 0,46 cm; L = 25 cm) gefüllt.
Die Qualitätsprüfung der gefüllten Säule mit Toluol als Referenzsubstanz ergibt eine theoretische Bodenzahl von 13'000.

Beispiel 8:

3,0 g des Materials gemäss Beispiel 6 wird analog zu Beispiel 7 in eine analytische HPLC-Säule gefüllt. Die theoretische Bodenzahl beträgt 12'500.

Beispiel 9:

Analog Beispiel 6 wird 1,0 g Aerosil 380 (Degussa, Frankfurt) umgesetzt. Das abgekühlte Produkte wird mit Ethanol aufgeschlämmt und dekantiert.
Nach dem Trocknen erhält man 0,5 g hellbeiges Pulver mit 13,2 % C, 1,71 % H und 1,55 % N, was einem Gehalt von 0,46 mMol/g chiralem Silan (auf % C basierend) entspricht. Die spezifische Oberfläche (BET) beträgt 184 $m^2/g$.

B) Anwendungsbeispiele

Beispiel 10:

Die racemischen Verbindungen

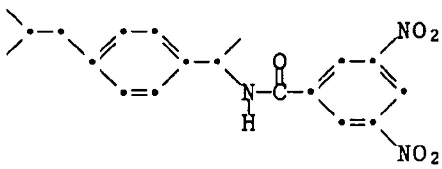 (I) und 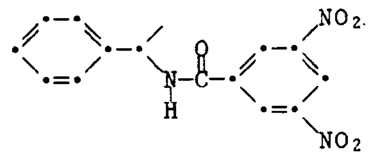 (II)

werden auf Säulen gemäss Beispielen 7 und 8 mit verschiedenen Eluenten in die Enantiomeren aufgetrennt. Die Ergebnisse sind in der nachfolgenden Tabelle dargestellt.

| Säule gemäss Beispiel | Verbindung | Elutionsmittel | Druck (bar)/ Fluss (ml/min) | $k'_1$ | $k'_2$ | α | $R_s$ |
|---|---|---|---|---|---|---|---|
| 7 | I | i-Propanol/Hexan (1:4) | 95/2 | 1,64 | 4,39 | 2,67 | 11,2 |
| 7 | I | i-Propanol/Hexan (2:3) | 104/2 | 0,53 | 1,40 | 2,64 | 9,20 |
| 7 | I | $CH_2Cl_2$ | 87/2 | 0,57 | 1,21 | 2,13 | 6,74 |
| 7 | I | $CHCl_3$ | 111/2 | 0,72 | 1,71 | 2,35 | 5,98 |
| 7 | I | t-Butanol | 70/2 | 2,24 | 4,73 | 2,11 | 8,97 |
| 8 | I | i-Propanol/Hexan (1:4) | 97/2 | 1,01 | 2,30 | 2,28 | 9,35 |
| 7 | II | i-Propanol/Hexan (1:4) | 95/2 | 4,35 | 9,55 | 2,20 | 8,77 |
| 8 | II | i-Propanol/Hexan (1:4) | 95/2 | 2,50 | 5,33 | 2,13 | 11,14 |

**Patentansprüche**

1. Verbindungen der Formel I

$$(R^1O)_{3-a}Si(R^2)_a-R^3-NH-\overset{O}{\overset{\|}{C}}-O-R^5-\overset{O}{\overset{\|}{C}}-NH-R^4-Y \qquad (I),$$

worin
$R^1$ $C_1$-$C_4$-Alkyl, Phenyl oder Benzyl bedeutet,
$R^2$ für $C_1$-$C_4$-Alkyl, Phenyl oder Benzyl steht,
a 0, 1 oder 2 bedeutet,
$R^3$ lineares oder verzweigtes $C_1$-$C_{12}$-Alkylen darstellt, das unsubstituiert oder mit -OH substituiert ist, oder $R^3$ Phenylen darstellt,
$R^5$ der um die -CO-O-Gruppe verminderte zweiwertige Rest eines Lactons mit insgesamt 4 bis 7 Ringgliedern im Lactonning ist, das mindestens ein chirales C-Atom enthält und einer reinen enantiomeren Form oder zumindest überwiegend einer enantiomeren optisch aktiven Form entspricht,
$R^4$ für eine direkte Bindung,

$C_1$-$C_4$-Alkyl-CH< oder $CF_3$-CH<

steht, und
Y Phenyl, Naphthyl, Fluorenyl oder Anthryl bedeutet, die unsubstituiert oder mit $C_1$-$C_{12}$-Alkyl, $C_1$-$C_{12}$-Alkoxy, Halogen, -CN oder -$NO_2$ substituiert sind.

2. Verbindungen gemäss Anspruch 1, worin $R^1$ für Methyl oder Ethyl steht.

3. Verbindungen gemäss Anspruch 1, worin $R^2$ für Methyl steht.

4. Verbindungen gemäss Anspruch 1, worin a 0 oder 1 bedeutet.

5. Verbindungen gemäss Anspruch 1, worin $R^3$ unsubstituiertes oder mit -OH substituiertes $C_2$-$C_6$-Alkylen ist, oder $R^3$ Phenylen bedeutet.

6. Verbindungen gemäss Anspruch 5, worin $R^3$ unsubstituiertes oder mit -OH substituiertes $C_3$-$C_4$-Alkylen ist, oder $R^3$ 1,3- oder 1,4-Phenylen bedeutet.

7. Verbindungen gemäss Anspruch 1, worin $R^4$ Ethyliden, 1,1-Propyliden oder 1,1,1-Trifluorethyliden ist.

8. Verbindungen gemäss Anspruch 1, worin Y für Phenyl oder Naphthyl steht, das unsubstituiert oder mit $C_1$-$C_4$-Alkyl, $C_1$-$C_4$-Alkoxy, -F, -Cl, -Br, -CN oder -$NO_2$ substituiert ist.

9. Verbindungen gemäss Anspruch 1, worin $R^4$ eine direkte Bindung und Y 3,5-Dinitrophen-1-yl oder 3,5-Dicyanophen-1-yl sind.

10. Verbindungen gemäss Anspruch 1, worin $R^4$ Ethyliden ist und Y für unsubstituiertes oder substituiertes Naphthyl steht.

11. Verbindungen gemäss Anspruch 10, worin -$R^4$-Y für die (R)- oder (S)-Form von

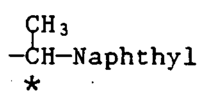

steht.

12. Verbindungen gemäss Anspruch 1, worin $R^5$ der zweiwertige Rest eines Lactons mit insgesamt 4 oder 5 Ringgliedern ist.

13. Verbindungen gemäss Anspruch 1, worin $R^5$ lineares $C_2$-$C_5$-Alkylen oder $C_3$-$C_5$-Alkenylen darstellt, das mit $C_1$-$C_6$-Alkyl, $C_1$-$C_6$-Alkoxy, $C_1$-$C_6$-Alkylthio, $C_1$-$C_{12}$-Alkylamino, $C_5$- oder $C_6$-Cycloalkyl, $C_5$- oder $C_6$-Cycloalkoxy, $C_6$-$C_{10}$-Aryl, $C_1$-$C_{10}$-Aryloxy, $C_7$-$C_{11}$-Aralkyl, $C_7$-$C_{12}$-Aralkyloxy, $C_1$-$C_6$-Halogenalkyl, $C_1$-$C_6$-Hydroxyalkyl, $C_1$-$C_6$-Alkoxymethyl, ($C_6$-$C_{12}$-Aryloxy)-methyl, ($C_6$-$C_{18}$-Aryl)methyloxymethyl, $C_1$-$C_{12}$-Acyloxy, -CO-$OR^8$, -O-CO-$OR^8$ , -F, -Cl, -Br, -OH oder -CN substituiert ist, wobei $R^8$ $C_1$-$C_6$-Alkyl, Cyclohexyl, Phenyl oder Benzyl bedeutet.

14. Verbindungen gemäss Anspruch 1, worin $R^5$ einem Rest der Formel II entspricht,

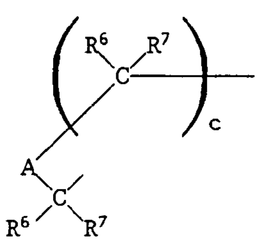

(II),

worin
A 1,2-Phenylen oder 2,3-Naphthylen bedeutet, das unsubstituiert oder mit -F, -Cl, -Br, -OH, -CN, $-NO_2$, $C_1$-$C_6$-Alkyl oder $C_1$-$C_6$-Alkoxy substituiert ist,
c für 0 oder 1 steht, und
$R^6$ und $R^7$ voneinander verschieden sind und H, $C_1$-$C_6$-Alkyl, $-CF_3$, Phenyl oder Naphthyl bedeuten, wobei das Phenyl oder Naphthyl unsubstituiert oder mit -F, -Cl, -Br, -OH, -CN, $-NO_2$, $-CF_3$, $C_1$-$C_6$-Alkyl oder $C_1$-$C_6$-Alkoxy substituiert ist.

**15.** Verbindungen gemäss Anspruch 1, worin sich ein chirales C-Atom im Rest $R^5$ in α- oder β-Stellung zur -O-Gruppe befindet.

**16.** Verbindungen gemäss Anspruch 1, worin $R^5$ für die R- oder S-Form von

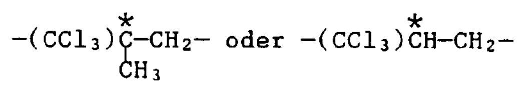

steht.

**17.** Verbindungen gemäss Anspruch 1, dadurch gekennzeichnet, dass es sich um die Stereoisomeren der Formeln

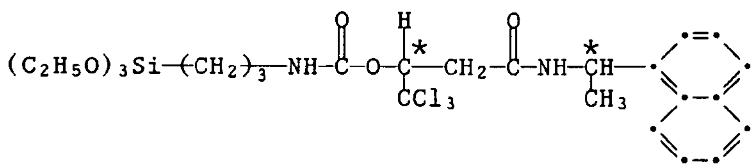

oder

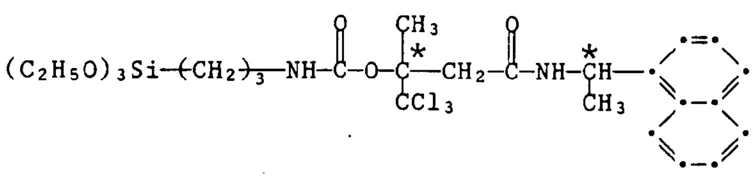

handelt, wobei * das chirale C-Atom in R- oder S-Form kennzeichnet.

**18.** Verfahren zur Herstellung von Verbindungen der Formel I, dadurch gekennzeichnet, dass man eine Verbindung der Formel III

$$(R^1O)_{3-a}Si(R^2)_a\text{—}R^3\text{-NCO} \qquad (III)$$

mit einer Verbindung der Formel IV

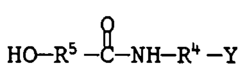 (IV)

umsetzt, wobei $R^1$, $R^2$, $R^3$, $R^4$, $R^5$, Y und a die in Anspruch 1 angegebenen Bedeutungen haben.

**19.** Material, dadurch gekennzeichnet, dass an eine Brückengruppe eines festen Trägermaterials Reste der Formel Va, Vb und/oder Vc

$$-Si(OR^1)_{2-x}(R^2)_x\!-\!R^3-NH-\overset{O}{\overset{\|}{C}}-O-R^5-\overset{O}{\overset{\|}{C}}-NH-R^4-Y \qquad (Va),$$

$$>Si(OR^1)_{1-y}(R^2)_y\!-\!R^3-NH-\overset{O}{\overset{\|}{C}}-O-R^5-\overset{O}{\overset{\|}{C}}-NH-R^4-Y \qquad (Vb),$$

$$\geq Si-R^3-NH-\overset{O}{\overset{\|}{C}}-O-R^5-\overset{O}{\overset{\|}{C}}-NH-R^4-Y \qquad (Vc),$$

gebunden sind, worin x für 0, 1 oder 2 und y für 0 oder 1 stehen und $R^1$, $R^2$, $R^3$, $R^4$, $R^5$ und Y die in Anspruch 1 angegebenen Bedeutungen haben.

**20.** Material gemäss Anspruch 19, worin es sich bei der Brückengruppe um -O- handelt.

**21.** Verfahren zur Herstellung eines Materials gemäss Anspruch 19, dadurch gekennzeichnet, dass man
a) ein festes Trägermaterial mit über Brückengruppen gebundenen Resten der Formeln VIa, VIb und/oder VIc

$$-Si(OR^1)_{2-x}(R^2)_x\!-\!R^3-NCO \qquad (VIa),$$

$$>Si(OR^1)_{1-y}(R^2)_y\!-\!R^3-NCO \qquad (VIb),$$

$$\geq Si-R^3-NCO \qquad (VIc),$$

mit einer Verbindung der Formel IV

$$HO-R^5-\overset{O}{\overset{\|}{C}}-NH-R^4-Y \qquad (IV)$$

umsetzt, oder

b) ein festes Trägermaterial, das gegenüber der Silangruppe $(R^1O)_{3-a}Si(R^2)_a$— reaktive Gruppen enthält, mit einer Verbindung der Formel I gemäss Anspruch 1 umsetzt,
wobei x für 0, 1 oder 2 und y 0 oder 1 bedeuten und $R^1$, $R^2$, $R^3$, $R^4$, $R^5$ und Y die in Anspruch 1 angegebenen Bedeutungen haben.

**22.** Verwendung eines Materials gemäss Anspruch 20 als stationäre Phase in chromatographischen Trennverfahren von insbesondere chiralen Verbindungen.

## Claims

**1.** A compound of formula I

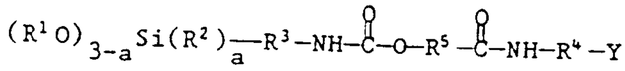 (I),

wherein
$R^1$ is $C_1$-$C_4$alkyl, phenyl or benzyl,
$R^2$ is $C_1$-$C_4$alkyl, phenyl or benzyl,
a is 0, 1 or 2,
$R^3$ is linear or branched unsubstituted or OH-substituted $C_1$-$C_{12}$alkylene or is phenylene,
$R^5$ is the divalent radical, diminished by the -CO-O group, of a lactone having a total of 4 to 7 ring members in the lactone ring, and containing at least one chiral carbon atom and corresponding to a pure enantiomeric form or at least predominantly to an optically active enantiomeric form,
$R^4$ is a direct bond,

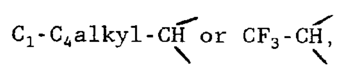

and
Y is phenyl, naphthyl, fluorenyl or anthryl, each unsubstituted or substituted by $C_1$-$C_{12}$alkyl, $C_1$-$C_{12}$alkoxy, halogen, -CN or $-NO_2$.

2. A compound according to claim 1, wherein $R^1$ is methyl or ethyl.

3. A compound according to claim 1, wherein $R^2$ is methyl.

4. A compound according to claim 1, wherein a is 0 or 1.

5. A compound according to claim 1, wherein $R^3$ is unsubstituted or OH-substituted $C_2$-$C_6$alkylene or is phenylene.

6. A compound according to claim 5, wherein $R^3$ is unsubstituted or OH-substituted $C_3$-$C_4$alkylene or is 1,3- or 1,4-phenylene.

7. A compound according to claim 1, wherein $R^4$ is ethylidene, 1,1-propylidene or 1,1,1-trifluoroethylidene.

8. A compound according to claim 1, wherein Y is phenyl or naphthyl, each unsubstituted or substituted by $C_1$-$C_4$alkyl, $C_1$-$C_4$alkoxy, -F, -Cl, -Br, -CN or $-NO_2$.

9. A compound according to claim 1, wherein $R^4$ is a direct bond and Y is 3,5-dinitrophen-1-yl or 3,5-dicyanophen-1-yl.

10. A compound according to claim 1, wherein $R^4$ is ethylidene and Y is unsubstituted or substituted naphthyl.

11. A compound according to claim 10, wherein $-R^4$-Y is the (R)- or (S)- form of

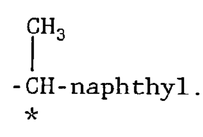

12. A compound according to claim 1, wherein $R^5$ is the divalent radical of a lactone containing a total of 4 or 5 ring members.

13. A compound according claim 1, wherein $R^5$ is linear $C_2$-$C_5$alkylene or $C_3$-$C_5$alkenylene, each of which is substituted by $C_1$-$C_6$alkyl, $C_1$-$C_6$alkoxy, $C_1$-$C_6$alkylthio, $C_1$-$C_{12}$alkylamino, $C_5$ or $C_6$cycloalkyl, $C_5$ or $C_6$cycloalkoxy, $C_6$-$C_{10}$aryl, $C_6$-$C_{10}$aryloxy, $C_7$-$C_{11}$aralkyl, $C_7$-$C_{12}$aralkoxy, $C_1$-$C_6$haloalkyl, $C_1$-$C_6$hydroxyalkyl, $C_1$-$C_6$alkoxymethyl, ($C_6$-$C_{12}$aryloxy)methyl, ($C_6$-$C_{18}$aryl)methoxymethyl, $C_1$-$C_{12}$acyloxy, $-CO-OR^8$, $-O-CO-OR^8$, -F, -Cl, -Br, -OH or -CN, where $R^8$ is $C_1$-$C_6$alkyl, cyclohexyl, phenyl or benzyl.

14. A compound according to claim 1, wherein $R^5$ is a radical of formula II

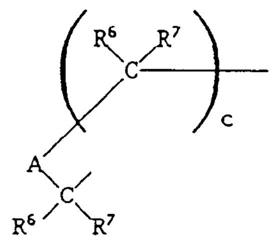

(II)

wherein
A is 1,2-phenylene or 2,3-naphthylene, each unsubstituted or substituted by -F, -Cl, -Br, -OH, -CN, $-NO_2$, $C_1$-$C_6$alkyl or $C_1$-$C_6$alkoxy,
c is 0 or 1, and
$R^6$ and $R^7$ are different from each other and are H, $C_1$-$C_6$alkyl, $-CF_3$, unsubstituted phenyl or naphthyl, or phenyl or naphthyl each substituted by -F, -Cl, -Br, -OH, -CN, $-NO_2$, $-CF_3$, $C_1$-$C_6$alkyl or $C_1$-$C_6$alkoxy.

**15.** A compound according to claim 1, wherein a chiral carbon atom in the radical $R^5$ is α- or β-oriented to the -O- group.

**16.** A compound according to claim 1, wherein $R^5$ is the R- or S-form of

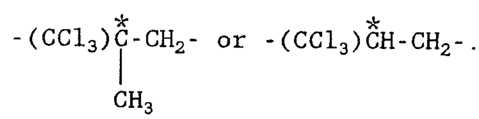

**17.** A compound according to claim 1, which is a stereoisomer of formula

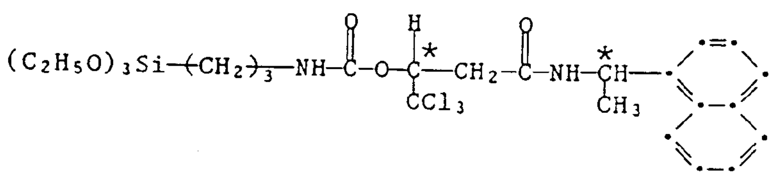

or

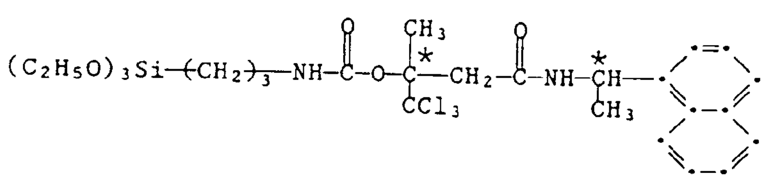

where * denotes the chiral carbon atom in R- or S-form.

**18.** A process for the preparation of a compound of formula I, which comprises reacting a compound of formula III

$$(R^1O)_{3-a}Si(R^2)_a—R^3-NCO \qquad (III)$$

with a compound of formula IV

$$HO-R^5-\overset{O}{\overset{\|}{C}}-NH-R^4-Y \qquad (IV)$$

where $R^1$, $R^2$, $R^3$, $R^4$, $R^5$, Y and a are as defined in claim 1.

**19.** A material wherein radicals of formulae Va, Vb and/or Vc

$$-Si(OR^1)_{2-x}(R^2)_x-R^3-NH-\overset{O}{\overset{\|}{C}}-O-R^5-\overset{O}{\overset{\|}{C}}-NH-R^4-Y \qquad (Va)$$

$$\rangle Si(OR^1)_{1-y}(R^2)_y-R^3-NH-\overset{O}{\overset{\|}{C}}-O-R^5-\overset{O}{\overset{\|}{C}}-NH-R^4-Y \qquad (Vb)$$

$$\rangle\!-Si-R^3-NH-\overset{O}{\overset{\|}{C}}-O-R^5-\overset{O}{\overset{\|}{C}}-NH-R^4-Y \qquad (Vc)$$

in which x is 0, 1 or 2, and y is 0 or 1, and $R^1$, $R^2$, $R^3$, $R^4$, $R^5$, and Y are as defined in claim 1, are attached to a bridging group of a solid support material.

**20.** A material according to claim 19, wherein the bridging group is -O-.

**21.** A process for the preparation of a material according to claim 19, which comprises reacting
a) a solid support material which contains radicals of formulae VIa, VIb and/or VIc

$$-Si(OR^1)_{2-x}(R^2)_x-R^3-NCO \qquad (VIa)$$

$$\rangle Si(OR^1)_{1-y}(R^2)_y-R^3-NCO \qquad (VIb)$$

$$\rangle\!-Si-R^3-NCO \qquad (VIc)$$

attached via bridging groups, with a compound of formula IV

$$HO-R^5-\overset{O}{\overset{\|}{C}}-NH-R^4-Y \qquad (IV)$$

or
b) reacting a solid support material which contains groups which are reactive to the silane group $(R^1O)_{3-a}Si(R^2)_a$- with a compound of formula I according to claim 1, where X is 0, 1 or 2, and y is 0 or 1, and $R^1$, $R^2$, $R^3$, $R^4$, $R^5$ and Y are as defined in claim 1.

**22.** Use of a material according to claim 20 as stationary phase in methods for the chromatographic separation of, in particular, chiral compounds.

## Revendications

1. Composés de formule I

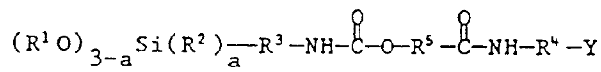 (I),

dans laquelle
$R^1$ représente un groupe alkyle en $C_1$ à $C_4$, phényle ou benzyle,
$R^2$ représente un groupe alkyle en $C_1$ à $C_4$, phényle ou benzyle,
a vaut 0, 1 ou 2,
$R^3$ représente un groupe alkylène en $C_1$ à $C_{12}$, linéaire ou ramifié, qui n'est pas substitué ou est substitué par -OH, ou, bien $R^3$ représente un groupe phénylène,
$R^5$ représente le reste divalent d'une lactone (diminuée du groupe -CO-O-) comportant au total 4 à 7 chaînons du cycle lactone, qui contient au moins un atome de C chiral et correspond à une forme énantiomère pure ou au moins, en majeure partie, à une forme énantiomère optiquement active,
$R^4$ représente une liaison directe, un groupe alkyl

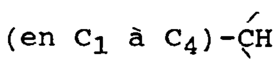 ou 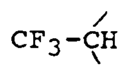,

et
Y représente un groupe phényle, naphtyle, fluorényle ou anthryle, non substitué, ou substitué par un groupe alkyle en $C_1$ à $C1_{12}$,alcoxy en $C_1$ à $C_{12}$, halogéno, -CN ou $-NO_2$.

2. Composés selon la revendication 1, dans lesquels $R^1$ représente un groupe méthyle ou éthyle.

3. Composés selon la revendication 1, dans lesquels $R^2$ représente un groupe méthyle.

4. Composés selon la revendication 1 dans lesquels a est nul, ou vaut 1.

5. Composés selon la revendication 1, dans lesquels $R^3$ représente un groupe alkylène en $C_2$ à $C_6$, non substitué ou substitué par -OH, ou bien $R^3$ représente un groupe phénylène.

6. Composés selon la revendication 5, dans lesquels $R^3$ représente un groupe alkylène en $C_3$ ou $C_4$, non substitué ou substitué par OH, ou bien $R^3$ représente un groupe 1,3- ou 1,4-phénylène.

7. Composés selon la revendication 1, dans lesquels $R^4$ représente un groupe éthylidène, 1,1-propylidène ou 1,1,1-trifluoréthylidène.

8. Composés selon la revendication 1, dans lesquels Y représente un groupe phényle ou naphtyle, qui n'est pas substitué ou qui porte comme substituant(s) un groupe alkyle en $C_1$ à $C_4$, alcoxy en $C_1$ à $C_4$, -F, -Cl, -Br, -CN ou $-NO_2$.

9. Composés selon la revendication 1, dans lesquels $R^4$ est une liaison directe et Y représente un groupe 3,5-dinitrophèn-1-yle ou 3,5-dicyanophèn-1,-yle.

10. Composés selon la revendication 1, dans lesquels $R^4$ représente un groupe éthylidène, et Y représente un groupe naphtyle non substitué ou substitué.

11. Composés selon la revendication 10, dans lesquels $-R^4-Y$ représente la forme (R) ou (S) d'un groupe

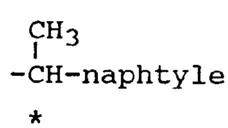

**12.** Composés selon la revendication 1 dans lesquels $R^5$ représente le reste divalent d'une lactone comportant au total 4 ou 5 termes ou chaînons de cycle.

**13.** Composés selon la revendication 1, dans lesquels $R^5$ représente un groupe alkylène en $C_2$ à $C_5$ ou alcénylène en $C_3$ à $C_5$, linéaires, groupe qui porte comme substituant un reste alkyle en $C_1$ à $C_6$, alcoxy en $C_1$ à $C_6$, alkylthio en $C_1$ à $C_6$, alkylamino en $C_1$ à $C_{12}$, cycloalkyle en $C_5$ ou $C_6$, cycloalcoxy en $C_5$ ou $C_6$, aryle en $C_6$ à $C_{10}$, aryloxy en $C_6$ à $C_{10}$, aralkyle en $C_7$ à $C_{11}$, aralkyloxy en $C_7$ à $C_{12}$, halogéno-alkyle en $C_1$ à $C_6$, hydroxyalkyle en $C_1$ à $C_6$, alcoxy méthyle en $C_1$ à $C_6$, (aryloxy en $C_6$ à $C_{12}$)-méthyle, (aryl en $C_6$ à $C_{18}$)-méthyloxyméthyle, acyloxy en $C_1$ à $C_{12}$, $-CO-OR^8$, $-O-CO-OR^8$, -F, -Cl, -Br, -OH, ou -CN, le symbole $R^8$ représentant un groupe alkyle en $C_1$ à $C_6$, cyclohexyle, phényle ou benzyle.

**14.** Composés selon la revendication 1, dans lesquels $R^5$ représente un reste de formule II :

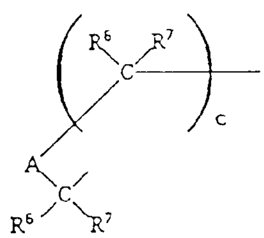

(II),

dans laquelle

A représente un groupe 1,2-phénylène ou 2,3-naphtylène, qui n'est pas substitué ou qui porte comme substituant un reste -F, -Cl, -Br, -OH, -CN, $-NO_2$, alkyle en $C_1$ à $C_6$ ou alcoxy en $C_1$ à $C_6$, C vaut 0 ou 1, et $R^6$ et $R^7$ représentent des groupes différents l'un de l'autre et ils représentent chacun H, un groupe alkyle en $C_1$ à $C_6$, $-CF_3$, phényle ou naphtyle, le groupe phényle ou naphtyle n'étant pas substitué ou portant comme substituant -F, -Cl, -Br, -OH, -CN, $-NO_2$, $-CF_3$, un groupe alkyle en $C_1$ à $C_6$ ou alcoxy en $C_1$ à $C_6$.

**15.** Composés selon la revendication 1, dans lesquels le reste $R^5$ comporte un atome de C chiral en position $\alpha$ ou $\beta$ par rapport au groupe -O-.

**16.** Composés selon la revendication 1, dans lesquels $R^5$ représente la forme R ou S de

$$-(CCl_3)\overset{*}{\underset{CH_3}{C}}-CH_2- \quad \text{ou} \quad -(CCl_3)\overset{*}{C}H-CH_2-$$

**17.** Composés selon la revendication 1, caractérisé en ce qu'il s'agit des stéréoisomères répondant aux formules

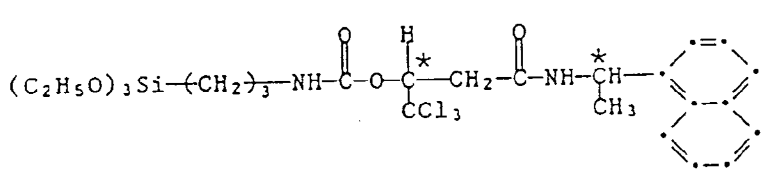

ou

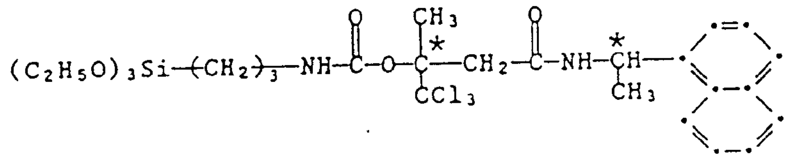

l'astérique (*) désignant l'atome de C chiral sous forme R ou S.

**18.** Procédé pour préparer des composés de formule I, caractérisé en ce qu'on fait réagir un composé de formule III

$$(R^1O)_{3-a}Si(R^2)_a\text{----}R^3\text{-}NCO \qquad (III)$$

avec un composé de formule IV

$$HO\text{-}R^5\text{-}\overset{O}{\overset{\|}{C}}\text{-}NH\text{-}R^4\text{-}Y \qquad (IV)$$

formules dans lesquelles $R^1$, $R^2$, $R^3$, $R^4$, $R^5$, Y et a ont les sens indiqués à la revendication 1.

**19.** Matière caractérisée en ce que, sur un groupe de pontage, sont fixés des restes d'une matière solide de support, répondant aux formules Va, Vb/ou Vc

$$-Si(OR^1)_{2-x}(R^2)_x\text{—}R^3\text{-}NH\text{-}\overset{O}{\overset{\|}{C}}\text{-}O\text{-}R^5\text{-}\overset{O}{\overset{\|}{C}}\text{-}NH\text{-}R^4\text{-}Y \qquad (Va),$$

$$>Si(OR^1)_{1-y}(R^2)_y\text{—}R^3\text{-}NH\text{-}\overset{O}{\overset{\|}{C}}\text{-}O\text{-}R^5\text{-}\overset{O}{\overset{\|}{C}}\text{-}NH\text{-}R^4\text{-}Y \qquad (Vb),$$

$$>Si\text{-}R^3\text{-}NH\text{-}\overset{O}{\overset{\|}{C}}\text{-}O\text{-}R^5\text{-}\overset{O}{\overset{\|}{C}}\text{-}NH\text{-}R^4\text{-}Y \qquad (Vc),$$

formules dans lesquelles x vaut 0, 1 ou 2 et y vaut 0 ou 1; et $R^1$, $R^2$, $R^3$, $R^4$, $R^5$ et Y ont les sens indiqués à la revendication 1.

**20.** Matière selon la revendication 19, dans le cas de laquelle il s'agit de -O- pour le groupe de pontage.

**21.** Procédé pour préparer une matière selon la revendication 19, caractérisé en ce que
a) on fait réagir une matière solide de support, comportant des restes, reliés par l'intermédiaire de groupes de pontage, et répondant aux formules VIa, VIb/ ou VIc,

$$-Si(OR^1)_{2-x}(R^2)_x\text{—}R^3\text{-}NCO \qquad (VIa),$$

$$>Si(OR^1)_{1-y}(R^2)_y\text{—}R^3\text{-}NCO \qquad (VIb),$$

$$\rangle Si-R^3-NCO \qquad (VIc),$$

avec un composé de formule IV

$$HO-R^5-\overset{O}{\overset{\|}{C}}-NH-R^4-Y \qquad (IV)$$

ou

(b) on fait réagir une matière solide de support, qui contient des groupes $(R^1O)_{3-a}Si(R^2)_a$--- pouvant réagir avec le groupe silane, avec un composé de formule I selon la revendication 1,

les indices x valant 0, 1 ou 2 et y valant 0 ou 1, et les symboles $R^1$, $R^2$, $R^3$, $R^4$, $R^5$ et Y ayant les sens indiqués à la revendication 1.

**22.** Utilisation d'une matière selon la revendication 20, comme phase stationnaire dans des procédés de séparation chromatographique, en particulier de composés chiraux.